(19) Europäisches Patentamt
European Patent Office
Office européen des brevets

(11) **EP 2 746 093 A1**

(12) **EUROPEAN PATENT APPLICATION**

(43) Date of publication:
**25.06.2014 Bulletin 2014/26**

(51) Int Cl.:
***B60L 11/18*** *(2006.01)*

(21) Application number: **12199179.8**

(22) Date of filing: **21.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fundació Privada Barcelona Digital Centre Tecnologic**
**08018 Barcelona (ES)**

(72) Inventors:
• **Enrich Sard, Regina**
  **08206 Sabadell (BARCELONA) (ES)**
• **Garcia Spiritto, Jose Javier**
  **08025 BARCELONA (ES)**
• **Torrent Moreno, Marc**
  **08390 Montgat (BARCELONA) (ES)**

(74) Representative: **Mohammadian, Dario et al**
**Bardehle Pagenberg**
**Avenida Diagonal 420 1-1**
**08037 Barcelona (ES)**

(54) **Method and apparatus for optimized management of an electric vehicle charging infrastructure**

(57)    The invention provides methods and apparatus for globally optimizing the management of electric vehicle charging, and for the daily management of the electric vehicle charging infrastructures, by taking into account a variety of input data which evolve dynamically along time and continuously learn and adapts to these changing conditions, such as power limitations, economic cost and possible other aspects such as origin of energy.

FIG. 1

EP 2 746 093 A1

**Description**

**TECHNICAL FIELD**

The present invention relates generally to the field of electric vehicles, EV, and in particular, to the management and charging process optimization of electric vehicle infrastructures EVI.

**BACKGROUND OF THE INVENTION**

Electric vehicles, EV, are a field of emerging interest since they appear to play a key role in decreasing the usage of fossil fuels and the production of air pollutants. However, they have an impact on electric power supply infrastructures. There is therefore a concern about whether the increase in electric demand originated by the massive increment of electric vehicle usage could saturate a power supply grid, such as the national grid. In any case an investment in new EV infrastructures, EVI, is necessary to cope with this increased development.

The operation of most of the current charging EV infrastructures consists in charging the vehicle as soon as it plugs into the charging point. In some of these implementations the supply can be interrupted in case the maximum power available is reached. These EVs operate in practically the same manner as the charging of any other conventional electric appliance: power supply is provided immediately, and stopped once charging is complete.

However EV charging infrastructures are more complex in nature than a single electric appliance. The complexity is related not only to the numerous EVs which might be connected to the EVI at any one moment in time, but also to the EV dynamics. An EVI will have to cope with a highly dynamic entry and exit rate of EV's, unlike other fixed-connection electric appliance charging devices. The power supply grid will also be heavily affected in this scenario. Whereas the connection of a single appliance has no significant effect on a power supply grid, the connection of numerous EVs requiring maximum power supply will have a bearing thereupon. Also the battery capacity of a rechargeable electric appliance is not the same as that of an EV. All of these factors affect the power supply management company, service provider, or utility, and cannot be ignored. Certain implementations consider this management problematic as a scheduling problem of generic loads having a predetermined load curve, or as a purely stochastic process with no predetermined pattern.

Having multiple small-scale EV deployments each operating in an autonomous way represents a challenge compared to dealing with large scale deployments of EV infrastructures because it cannot benefit from compensatory effect of aggregation in stochastic processes. However, the most likely scenario appears to be one where different stakeholders, ranging from electric utilities to facilities managers, deploy small scale charging infrastructures, rather than the one where a unique stakeholder takes care of the whole charging infrastructure of a city or region.

Hence a need exists for globally optimizing the management of EV charging infrastructures which solves the abovementioned problems.

**SUMMARY**

It is therefore an object of the present invention to provide solutions to the above mentioned problems. In particular it is the objective of the invention to provide methods and apparatus for globally optimizing the management of EV charging infrastructures.

In one aspect this is done by taking into consideration several factors, such as power limitations (locally produced or coming from a utility), economic cost, and origin of energy. Also not only is the random component in EV arrivals and departures and parking time taken into account as a factor, but a model is proposed that takes into account social behaviour of users and exploits these user's profiles. This additional social-related information will further help in optimising the technical decision making aspects related to EVI management.

In another aspect it is also proposed to apply to this particular problematic a linear programming optimization scheme as it is highly efficient for solving deterministic problems thus avoiding the complexity of stochastic linear programming.

In another aspect a forecasting model is presented aimed at performing with a high degree of accuracy in a wide range of EV charging infrastructures types due to its flexibility in the model adaption and its learning capability features.

The optimised management of the invention is flexible enough to take a variety of input data which evolve dynamically along time and continuously learn and adapt to those changing conditions. These methods are valuable for the optimization of the daily management of the EV infrastructure; they take into consideration power limitations, economic cost and possible other aspects such as origin of energy (since this might have environmental implications that could drive the development of specific business cases).

In particular, it is the object of the present invention to provide an apparatus for managing an electric vehicle charging infrastructure EVI for charging at least one electric vehicle, EV.

It is another object of the present invention to provide a method for managing an electric vehicle charging infrastructure EVI for charging at least one electric vehicle, EV.

The invention provides methods and devices that implement various aspects, embodiments, and features of the invention, and are implemented by various means. For example, these techniques may be implemented in hardware, software, firmware, or a combination thereof.

For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the various means may comprise modules (e.g. procedures, functions, and so on) that perform the functions described herein. The software codes may be stored in a memory unit and executed by a processor. The memory unit may be implemented within the processor or external to the processor.

Various aspects, configurations and embodiments of the invention are described. In particular the invention provides methods, apparatus, systems, processors, program codes, and other apparatuses and elements that implement various aspects, configurations and features of the invention, as described below.

## BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.

FIG. 1 depicts a single charging station of an EVI according to one aspect of the invention.

FIG. 2 depicts an EVI comprising a plurality of single EVI charging stations according to one aspect of the invention.

FIG. 3 depicts a single charging station of an EVI according to another aspect of the invention.

FIG. 4 depicts the forecasting method according to one aspect of the invention.

## DETAILED DESCRIPTION OF THE INVENTION

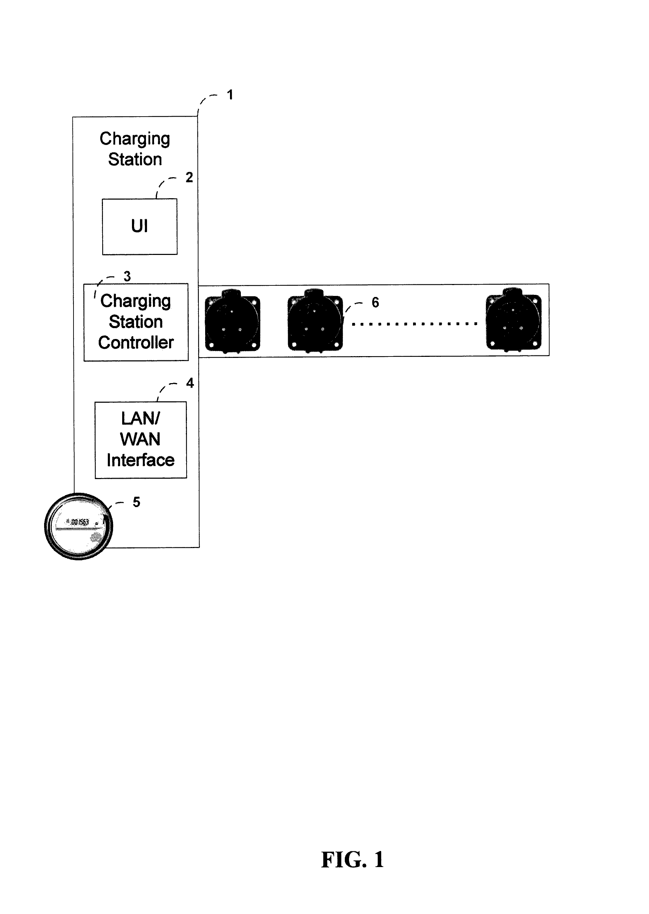

FIG. 1 depicts a single charging station apparatus according to one aspect of the invention. The charging station 1 comprises a user interface 2, a charging station controller 3, a communications interface 4, an electricity meter 5, and at least one plug 6 for connecting EV. The EV is connected to the charging station 1 via a plug 6. Before, during and after charging, the EV user can configure its preferred settings and can visualise the results of the charging process via UI 2 and electricity meter 5. The communications interface 4 enable automatic data exchange between the EV and the EV charging station. Finally, the process at this particular charging station 1 is controlled by the charging station controller 3.

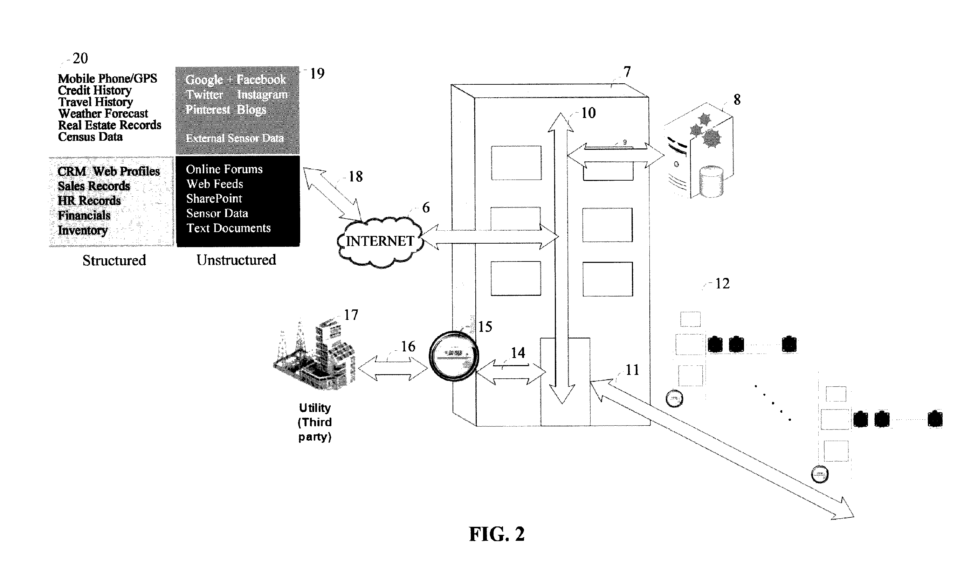

FIG. 2 depicts a plurality of these single charging stations managed in an optimised manner by considering them in combination as an EV infrastructure system. This scenario comprises a building facility 7 and other charging stations 12. These stations are connected to eachother via a communications channel 11. Each charging station is connected to a third party power supply utility 17 via a communications channel 16. Via connections 13, 18 to the internet 6, the charging station has access to a myriad of databases comprising user related, EV related and EVI related information and data necessary for the optimisation process. This data can be stored in unstructured form 19 or structured form 20. Further the data can be subjective user data related to its preferences and behaviours or objective. Finally, further similar data may also be available directly via a direct connection 9 from the charging station and a different database/server 8 collecting onsite information.

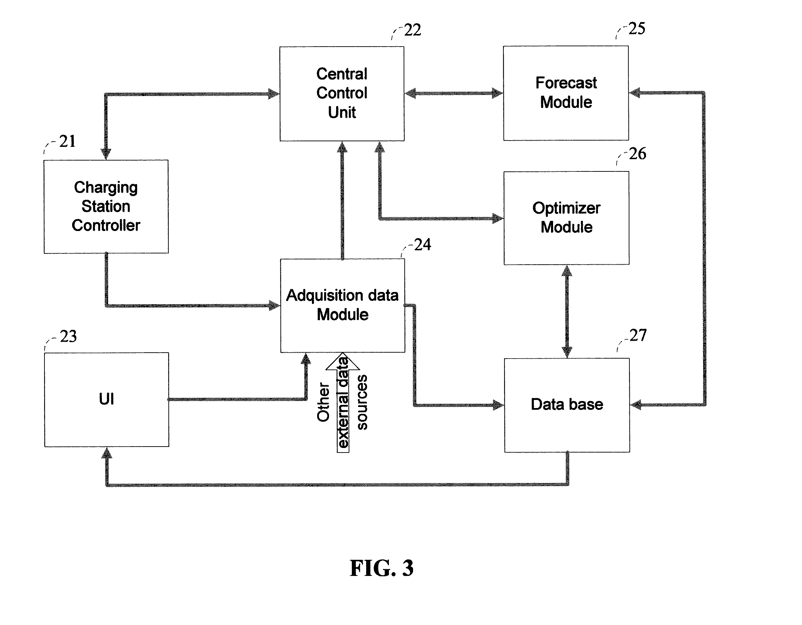

FIG. 3 depicts another aspect of the single charging station with more details of the charging process management as part of a larger EV infrastructure to be managed optimally. In this apparatus, in addition to the user interface 23 and charging station controller 21, the charging station may comprise a data acquisition module 24, an optimizing module 26, a forecast module 25, a database 27 and a central control unit 22. The data acquisition module interfaces either directly, or via user interface, with external and internal data sources to compile and populate the database with the user related, EV related and EVI related information. The forecast module performs the data forecasting phase of completing missing information using forecasting algorithms in order to provide a complete data set ready for optimisation. The forecasting module also provides a compact data set by merging similar information and filtering redundant information, with the objective of reducing the processing power necessary for processing the complete data set. The optimizer module then performs the charging process in an optimised manner, taking account all complete relevant data sets, such as user related, EV related, and EVI related information, in order to comply with user set preferences, EV necessities, as well as EVI preferences and constraints. The complex optimisation process is managed by a central control unit in combination with the charging station controller of each charging station, as well as with the remaining modules mentioned.

The abovementioned process may be performed either centrally, in a distributed manner, or in mixed form. In a first central configuration the EVI is managed centrally by a central control unit comprised within a single apparatus. In a second distributed configuration at least part of the control units of the EVI park perform the optimization process independently. In a third mixed configuration the input and output of the forecasting and optimization algorithms are performed by all apparatus, however wherein a single apparatus serves as central controller for data collection.

The present disclosure allows the optimized management of EV infrastructure operation through technical parameter optimisation using an improved globalised EV charging process. The charging process is constrained to power limitation, energy cost and users preferences such as schedules or usage of green energy. Although it is not specifically designed for a determined number of charging points, it is envisioned that the best performance would be for infrastructures of tens of charging points, denoting this size as a small-scale EV charging infrastructure.

In order to support the functionalities envisioned within the different embodiments of this invention, the proposed EV charging process is self-adaptive able to learn and adapt to the different changing conditions of the input data. This is particularly relevant for real time management and optimization of the EV charging infrastructure.

The optimised EVI management is accomplished by providing methods and apparatus which globally collaborate in two main phases. The first forecasting phase comprises the prediction of a plurality of data and indicators, also comprising information collection from a variety of information sources, in a structured manner necessary for the subsequent second optimisation phase for decision making.

To optimize the charging process of the EVs in a particular EVI it is necessary to define an objective function. The function proposed maximizes the operability of the EVI taking into account the cost of the energy and users' preferences, all constrained to the maximum capacity of the EVI and maximum power transferred per charging point.

The objective function comprises the following assumptions, which might be applied either separately or in combination. It is assumed there is a fixed number of charging points. The maximum capacity of the infrastructure is limited by the maximum power available. The maximum power available can vary over time, either because an active demand side management policy applies or because of intermittent local generation (i.e. based on renewable energy). The maximum power in every charging point is predetermined. The prices of electricity can vary hourly. The fact that an EV is in the facility does not imply necessarily that it is charging.

The objective function comprises the following options, which might be applied either separately or in combination. The user is offered the choice to select among the following charging options. A first option called "charge as soon as possible" implies that the system will prioritize the charging of the EV as soon as it is plugged into the charging point, and the charging process won't be interrupted until the battery has reached the minimum SOC required. In a second charging option called "charge as cheapest as possible" the time periods with the lowest prices for electricity are allocated for charging. In a third option called "charge as ecofriendly as possible" the EV is charged during time periods where most of the energy comes from renewable sources. The user is aided in its decision making by the facility operator, which can provide and apply different tariffs according to the option selected by the user. These tariffs can be predetermined or can vary according to context variables, such as price of energy, degree of occupancy or availability of renewable energy.

The objective function comprises the following estimations, which might be applied either separately or in combination. The energy demand distribution over time is estimated, which in turn depends on the number of vehicles arriving to the facility, the amount of time the vehicles remain in the facility, and the energy required by each vehicle.

The objective function comprises the following actions, which might be applied either separately or in combination. The charging process for every vehicle can be interrupted and resumed later by the facility. Penalties in case of not supplying the minimum amount of energy required to each vehicle can be applied

## FORECASTING

As mentioned, previous to the optimization of the charging process, it is necessary to forecast the EV arrival rate at the facility, the average time a vehicle stays in the facility and the EV storage capacity available. A statistical learning algorithm is proposed for this purpose. The methodology consists on decomposing the value to be forecasted into different components that can be additive or multiplicative. In this case, it is proposed an additive model, where the forecasted value Ã is obtained by the addition of components a1, a2, a3, a4, a5, where each component represents the contribution to the variable to be estimated (such as EV arrivals):

$$\tilde{A} = a1 + a2 + a3 + a4 + a5 \qquad \text{[expression 1]}$$

This methodology involves the definition of a mathematical model. It is assumed that arrivals and departures of EV in the facility are not totally random but they respond to social behaviour of drivers. EV arrivals, average parking time and EV storage capacity will be estimated independently, using the same methodology and basically the same model. However, to increase parking time and storage capacity estimation accuracy, an alternative methodology can be applied when additional information is provided, as explained later on.

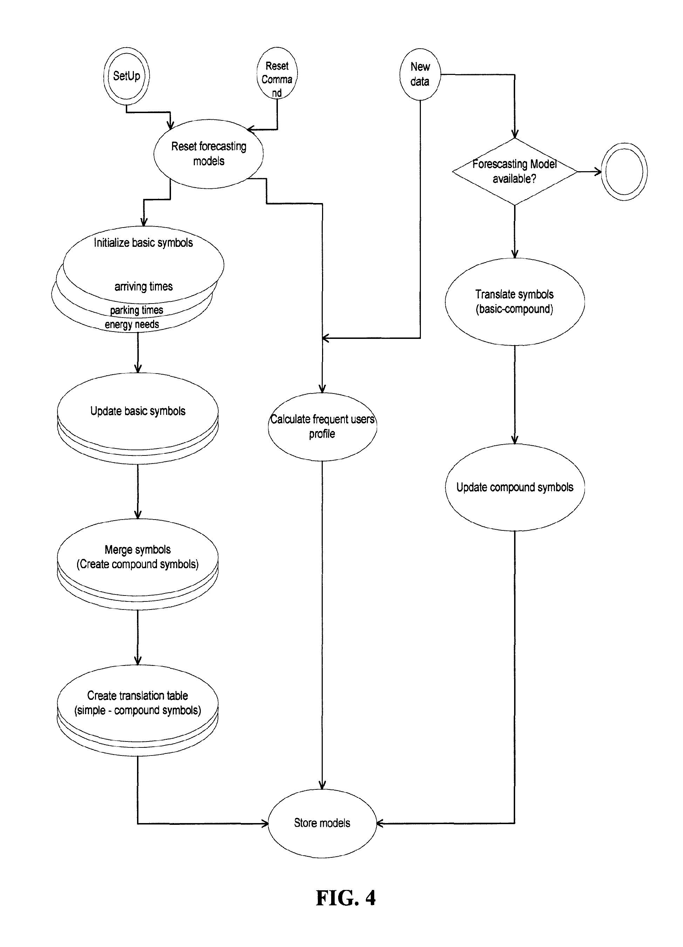

FIG. 4 depicts one aspect of the forecasting model, comprising at the beginning an initial setup or a reaction to a reset command, in order to reset the forecasting model used. In one aspect the basic symbols are initialised and updated in real-time. Any redundant information is filtered out, or deleted, whereas other similar information is merged into a single basic symbol. Finally a translation table is generated in order to map the basic symbol set to a reduced compound set more compact and better optimised for processing. These compound symbols are stored in a database, wherein the translation table comprises a mapping as dictated by the combined forecasting models. In case new forecasting models are made available, these are integrated into the process by generating or updating the translation table in order to update any corresponding compound symbols. Hence these are taken into account adaptively and in real time. Finally, also in real time new data is added into the process, such as information related to the EVI use.

The model can comprise a base line component which captures the growth trend. The trend can be affected by the increasing penetration of EV, but also by other factors not exclusively related to EV. For instance, an increment of the activity in a business or commercial emerging area, or, on the contrary, a decrement caused by nearby construction work that affects mobility. All these factors affecting in a sustainable way the usage of the infrastructure are meant to be gathered in this component.

The model can comprise a season component which captures the seasonality of the variable: different behaviour in winter and in summer, or holiday periods compare to working periods. Season periods depend hugely on the activity of the area where the infrastructure is located.

The model can comprise a day type component. Types of day can be established a priori taking into account calendar information - "Workday", "Saturday", "Sunday" - but particularly for special days (planned or unplanned events), calendar information could be complemented with information introduced in the system by the operator and non-structured data obtained from different sources of information, including but not restricted to specific web pages publishing events and social networks with geo-positioned information. For instance, an unusual number of tweets in the surrounding area where the facility is located can switch a standard Monday into a special day regarding EV arrival rates.

For the storage capacity available, referring to the difference between the maximum capacity of the battery and the state of charge when plugging in the charging point, this component combines not only the current day type, but the previous one, and the categories will be combinations such as "Working day-Working day", "Sunday-Working day", and similar, since the current state of charge can be affected by activities performed in the previous day.

The model can comprise a day hour component. The time of the day affects greatly the arrival rates to the facility. In a business area most of the vehicles will arrive early in the morning and will leave in the afternoon, while in a residential area will be quite the opposite. The hour of the day does not refer strictly to the clock time, but to periods of activity, like "early morning", "mid-morning", "noon", and the like.

The model can comprise a weather conditions component. The weather, in some regions, affects the mean of transportation people choose for their trips. For instance, people that usually go to work by bicycle or motorbike will switch to car or public transportation when raining. In consequence, the number of vehicle coming to a facility will be affected. On the other hand, the state of charge is also dependant in weather conditions. However, the dependency in this case is rather due to the influence of weather conditions, mainly temperature, in the performance of battery and auxiliary services in the vehicle than to the driver's habits.

For each component, a set of symbols are defined in categories. In order to define the number of symbols in each category that fits infrastructures located in areas with different activity profile (residential, business, educational, ...), a two level approach is proposed. Firstly, the symbols for each category are defined with a high degree of granularity (basic symbols). The second step consists in comparing the values of the symbols for each component. In those cases where neighbour symbols have similar values (under a predefined tolerance) the neighbouring symbols will be merged into one. After this process, a second set of symbols will be generated (compound symbols) that will be used for the actual forecasting process. This process of transforming basic symbols into compound symbols is performed once, at the beginning of the set up process, or eventually on demand, every time the facility operator judges that there have been changes in the users' behaviour. This mapping of basic symbols into compound symbols is performed using a translation table.

The basic symbols proposed for the EV arrival estimation rate are the following:

- **Base line**

  $\{B_0\}$: average EV arrivals

- **Season**

  $\{S_i\}$ $i \in 1: 26$; resulting from splitting the year into periods of 2 weeks

- **Day type**

  o For EV arrivals:

$$D = \left\{ \begin{array}{c} \text{Sunday, Monday, Tuesday, Wednesday, Thursday, Friday, Saturday,} \\ \text{SpecialDay1, SpecialDay2 ...} \end{array} \right\}$$

Days of the week and any special day the operator had tagged.
o For storage capacity:

$D$ = {Working day - Working day, Holiday - Working day, Working day - Holiday, Holiday - Holiday, Working day - Saturday, Saturday - Holiday, Holiday - Saturday, SpecialDay_i - Workday, Workday - SpecialDay_i}

Sundays are considered as *Holiday*

- **Hour of the day**
  $\{H_i\}$ $i \in$ 0: 23; clock hour

- **Weather conditions**
  {T-R} where
  $T$ E {..., $T_{-10}$, $T_{-8}$, $T_0$, $T_2$, ...} represents average temperature grouped in ranges of 2 degrees and establishing the minimum and maximum range according to typical area temperatures values, and eventually adding a range "lower than X" and "higher than Y"
  $R \in$ {*Sunny, Partially cloudy, Cloudy, Light rain, Heavy rain, Snow*}

In other words, firstly, initial value for $B_0$ , named $\tilde{B}_0$ is calculated averaging all historical data. For instance, if the variable to be forecasted is the number of vehicles per hour arriving to the facility, $\tilde{B}_0$ will be the average number of EV arrivals per hour (for any day and any hour). Secondly, initial values for {Si}, $\tilde{S}_i$, are calculated averaging the difference between $\tilde{B}_0$ and the average number of EV arrivals per hour for Si period. Then, initial values for {$D_i$} are calculated averaging the difference between $\tilde{B}_0$ - $\tilde{S}_i$ and the average number of EV arrivals per hour for $D_i$ period. Initial values for the rest of the symbols of the next components are calculated with the same procedure.

The value for each symbol is recalculated using an exponential smoothing methodology. Starting from the beginning of the historical data set to be considered and going forward, the symbols are updated taking into account the error between the estimated value, calculated from the addition of current symbols and the real value. The error is distributed among the different components using a smoothing constant to prevent the appearance of artefacts due to spurious changes or data gathering errors.

The symbols are updated with new real data, as well. This feature provides learning capabilities to the forecast method enabling it to self-adapt to behavioural changes. At the same time, the smoothing constant prevents the appearance of artefacts due to spurious changes or data gathering errors and controls how fast the algorithm reacts to changes.

When no historical data is available, categories will be initialized using distribution probability functions. In one aspect, for EV arrivals it is considered that a Poisson distribution is suitable:

$$f(k; \lambda) = \Pr(X = k) = \frac{\lambda^k e^{-\lambda}}{k!}, \qquad \text{[expression 2]}$$

where $\lambda$, will be obtained by observation of area activity. Since it is assumed that the behaviour of an EV user is similar to the one of a conventional vehicle user, the parameter can be estimated considering any type of vehicle, and then taking for granted that EVs represent a percentage of total vehicles.

In another aspect, for the estimation of the time the EV stays in the facility, an Erlang distribution is suitable:

$$f(x; k, \lambda) = \frac{\lambda^k x^{k-1} e^{-\lambda x}}{(k-1)!} \quad \text{for } x, \lambda \geq 0 \qquad \text{[expression 3]}$$

Parameters k, λ are again dependant on social behaviour of facility users.

Even if historical data exists, but a specific category has not been instantiated, because it is the first time it appears, the value assigned to this category will be obtained by a weighted average of neighbours categories. Notice that categories must be sorted according to their similarity.

When the user of the EV is a regular/usual user, their profile is used instead. In one aspect, for the parking time, exploiting user's behaviour, it is proposed to build a pattern, when the user can be identified. The identification can be done by means of a control access camera reading the plate of the vehicle, an RFID card (or any other type of card) the user uses to unlock the charging point or for billing purposes or an app where the user can interact with the charging infrastructure to book a charging point or to express their preferences. The pattern for parking time will be calculated using historical user data taking into account time arrivals and type of days. The pattern will be considered valid when a minimum number of samples are available (5 samples). Otherwise, the general forecast method described above will be used.

In another aspect, for the storage capacity available, referring to the difference between the maximum capacity of the battery and the state of charge when plugging in the charging point, it is also envisioned to use EV profile to improve accuracy. The same concept described in the parking time pattern, applies to storage capacity.


OPTIMIZATION

After the forecasting step, the optimization is performed for a given period H, typically 1 day. This period is discretised; that is, it is divided into T elementary intervals of length $\Delta T = H/T$, called steps (typically 15 minutes). It is assumed that changes of input parameters during each step are negligible so that they can be considered constant. Also the output of the optimization; that is the set points for the charging points are constant during each step.

There are two slightly different types of values expressing time: the elementary intervals and the boundaries of elementary intervals. For example, the cost of energy is constant during the whole interval, while the level of charge of a battery is valid at the beginning of the interval. To avoid off-by-one errors, let us establish a numbering convention: the $t^{th}$ step is between time t and t+1, where steps are numbered 1, ..., T and the boundary times 1, ..., T+1.

The optimization is based on linear programming methodology. The selected algorithm is Minimum Cost Network Flow, although other linear optimization algorithms are also suitable.

The optimization requires the definition of a set of linear equalities and inequalities (constraints) and an objective function (minimization/maximization criteria). The challenge of the optimization of this problem lies on the fact that some of the variables involved are stochastic, such as EV arrivals and departures and energy demanded. Although one could use stochastic linear programming for this optimization, this problem is not so well studied and the available algorithms are not as efficient as for the standard linear programming. The methodology proposed is to introduce in the objective function terms that varies according to the confidence range of the variables and distinguished between the energy demanded by EVs that are actually plugged-in in the facility and the forecasted energy for coming EVs. The optimization will run periodically or triggered by selected events taking into account up-to-date context variables.

A consideration which can be taken into account is that the charging point can vary continuously between 0 and Pmax. In those cases where the infrastructure only allow the power to switch between ON (Pmax) and OFF (0), time switching will be used to obtained the desired average value within a time step, but externally to the optimization algorithm.

Another consideration which can be taken into account is that a vehicle stays in the facility a subset of contiguous steps from the optimization period P. The step corresponding to the arrival of the vehicle is denoted as Tarr and the step when the vehicle leaves is denoted as Tdep. Multiples arrivals to the facility of the same vehicle within the optimization period P, will be considered as independent.

Another consideration which can be taken into account is that the self-discharge rate for the EV battery is not considered since for Li-Ion batteries, it is 2-3%/month; that is 0,004%/hour, that can be neglected in 1-day-ahead optimizations.

Another consideration which can be taken into account is that the power requested by the EV is assumed to be constant through all the charging process, which is mainly true while the state of charge is under 80% of the battery capacity in Li-Ion batteries (current EV batteries technology).

Another consideration which can be taken into account is that the state of charge of every vehicle can be monitored and the energy needed to be transferred until reaching the state of charge required can be adjusted according to these measurements.

Another consideration which can be taken into account is that the maximum storage capacity of the battery of each EV is known (recorded in a database for a particular EV or a generic EV model).

Table I depicts a notation table to ease the comprehension of the equations presented in the definition of the optimization problem. The units are only exemplary units; they don't affect the approach to the problem. The only condition is that they are coherent.

TABLE I

| Variable | Description | Units |
|---|---|---|
| H | Optimization horizon | hours |
| T | Number of time intervals | |
| $\Delta T$ | Step (unitary time interval) | hours |
| $Pf^{max}_t$ | Maximum power available in the facility at time t | kW |
| $P_p^{max}$ | Maximum power transferred by the charging point. It is considered to be constant | kW |
| $X^{ch}_{t,v}$ | Quantity of energy to store in vehicle v at time t | kWh |
| $X^{st}_{t,v}$ | Quantity of energy stored in vehicle $v^{th}$ at time t (stage of charge) | kWh |
| $T^{arr}_v$ | Arrival time of $v^{th}$ vehicle | |
| $T^{dep}_v$ | Departure time of $v^{th}$ vehicle | |
| $X^{init}_v$ | Quantity of energy stored in vehicle $v^{th}$ when arriving | kWh |
| $X^{final}_v$ | Minimum quantity of energy required by vehicle $v^{th}$ when leaving | kWh |
| $X^{max}_v$ | Maximum quantity of energy that can be stored by vehicle $v^{th}$ | kWh |
| $e_t$ | Cost of energy | €/kWh |
| $g_t$ | Quantity of energy needed in the facility at time t | kWh |

The following considerations can be taken into account for the mapping either separately, or in combination:

- All variables are assumed to be nonnegative; that is:

$$v \geq 0 \quad \forall v \text{ being } v \text{ any variable} \qquad \text{[expression 4]}$$

- The total amount of energy transferred to all EV in the facility, for every time step, cannot overcome the power limitation of the installation ($Pf^{max}_t$)

$$\sum_{v \in \{EV\}} x^{ch}_{t,v} \leq Pf^{max}_t \cdot \Delta T \quad \forall t$$

[expression 5]

- The total energy transferred to an EV in a time step cannot overcome the maximum power charging limitation $(Pp_v^{max})$

$$x^{ch}_{t,v} \leq Pp_v^{max} \cdot \Delta T \qquad \forall t, \forall v$$

[expression 6]

- Conservation of energy in the battery of the EV
  The level of charge at the end of the step t is determined by the level of charge at the start of the interval and the charging action.

$$x_{t+1,v}^{st} = x_{t,v}^{st} + x_{t,v}^{ch} \quad \forall v, \qquad Tarr_v \leq t \leq Tdep_v$$

[expression 7]

- EV battery initial and final conditions

$$x_{Tarr_v,v}^{st} = x_v^{init}$$

$$x_{Tdep_v,v}^{st} \geq x_v^{final}$$

[expression 8]

- The total energy transferred to an EV cannot overcome its storage capacity

$$x_{t,v}^{st} \leq x_v^{max} \quad \forall v, \, Tarr_v \leq t \leq Tdep_v$$

[expression 9]

- In another aspect, the objective function to maximize comprises the following terms:

$$F = F_{income} - F_{energy} - F_{undeliv} - F_{non-eco} - F_{delay}$$

[expression 10]

- Income for energy provided to EV

$$F_{income} = \sum_{v} \sum_{Tarr_v}^{Tdep_v} C_v^{inc} \cdot x_{t,v}^{ch}$$

[expression 11]

As mentioned previously, a different tariff can be applied to each vehicle; for instance depending on the selection of charging mode (priority, economic, ecologic).

- Cost for energy needed to supply demand (typically bought to the grid)
  In fact,

$$F_{energy} = \sum_{t} e_t \cdot g_t$$

[expression 12]

$$g_t = \sum_v x_{t,v}^{ch}$$

[expression 13]

- Cost for undermining the Quality of Service is the term that takes into account the stochastic nature of the input data. The penalties factors change according to the confidence of the data and the option preferred by the user.

$$F_{undeliv} = \sum_v \alpha \cdot C_v^{pen} \cdot x_v^{lack}$$

[expression 14]

$\alpha = 1$ if v is already in the facility

$\alpha = e^{-\sigma v}$ where $\sigma_v$ is the variance of the data

$C_v^{pen}$ is to be fixed by the facility operator according to tariff policies, in the same level as price tariffs.

$$x_v^{lack} = x_v^{final} - x_{Tdep_v,v}^{st}$$

[expression 15]

$x_v^{final}$ can be established as a percentage of the total amount of energy that could be transferred to the EV with an uninterrupted charge.

In the case of the priority charge ("charge as soon as possible") it is recommended to set this percentage to 95%-100%. In the case of ecocharge ("charge as ecofriendly as possible") and economic charge ("charge as cheapest as possible") it is recommended to calculate set this percentage lower, around 75-80%. The percentage can be calculated dynamically taking into account the ratio of "ecofriendly" or "economic" steps are included in the expected parking time.

- Penalty for amount of non-green energy for the EV tagged as "charge as eco-friendly as possible"

$$F_{non-eco} = \sum_v \alpha \cdot C_v^{eco} \cdot \left(1 - \frac{Emissions_v}{Emissions_v^{best}}\right)$$

[expression 16]

$\alpha = 1$ if v is already in the facility

$\alpha = e^{-\sigma v}$ where $\sigma_v$ is the variance of the data

$Emissions_v^{best}$ Emissions$_v$ denote the quantity of emissions generated by the charge of the EV taking into account the energy mix (distribution of sources of energy) in the best scenario (minimum amount of CO2 emissions generated possible) and the actual scenario (due to the global optimization it might happen that the charge has not reach the minimum generation of CO2 emissions)

- Penalty for delaying the priority charge of EVs tagged as "charge as soon as possible".

$$F_{delay} = \sum_t \sum_v \alpha \cdot C_v^{del} \cdot (t - T_{arr_v}) \cdot x_{t,v}^{ch}$$

[expression 17]

$\alpha = 1$ if v is already in the facility $\alpha = e^{-\sigma_v}$ where $\sigma_v$ is the variance of the data $C_v^{del}$ acts as a bonus for early charges.

It is not considered a penalty for overprice (compared to the minimum possible cost) for the EV tagged as "charge as cheapest as possible" since the global criteria of the objective function is to maximized profit, and that includes minimized cost of energy.

Therefore as can be derived from the above disclosure, the optimised EV charging process and management of EVIs comprises numerous combined features and advantages inexistent in conventional implementations. For example, the estimation of stochastic data (such as EV arrival and departure rate, parking time and charging needs) permits integrating information within the management process even if not immediately available for collection. This permits the abovementioned decision making process not to ignore data which exists, however has not been collected. Hence the decision making process is rendered complete.

Also, the management of small-scale EV charging infrastructures in real time is also optimized according to configurable objective functions. These objective functions enable the management in real time of small EV charging infrastructures (tens of EV charging points). They also allow managing the concurrent optimization of different EV charging processes according to different recharging requirements, but at the same time taking into account global optimization objectives (for example, as imposed by a facility or utility manager).

Also, a plurality of data and variables are taken into account, time varying, structured and non-structured as the input for the optimization algorithms. When optimizing the management of a small scale EV charging infrastructure, many parameters should be considered, from input data provided by EV owners (for example, charging requirements such as quick charging, cheapest charging or eco charging among others), real time energy demand of a facility, variable electricity price tariff, stochastic arrival/departure of EV, weather conditions and some others.

Also self-adaptive methods/algorithms with learning capabilities are integrated into the methodology. The methods proposed are intended not only to manage a variety of different input data and infrastructures, but also to learn from it and adapt their results according to this.

It is to be understood by the skilled person in the art that the various embodiments, realisations, and aspects of the invention have been so drafted with the aim of disclosing the invention in a concise manner. This does not mean that the intention is of limiting the scope of the disclosure to the precise combination of embodiments, realisations, and aspects as drafted. On the other hand, the intention is that the different features of the inventive concepts described may be readily understood to be combinable as would be derived from a direct and objective reading of the disclosure by one of ordinary skill in the art.

Furthermore, it is to be understood that the embodiments described herein may be implemented by hardware, software, firmware, middleware, microcode, or any combination thereof. When the systems and/or methods are implemented in software, firmware, middleware or microcode, program code or code segments, a computer program, they may be stored in a machine-readable medium, such as a storage component. A computer program or a code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, and the like, may be passed, forwarded, or transmitted using any suitable means including memory sharing, message passing, token passing, network transmission, or others.

**Claims**

1. An apparatus for managing an electric vehicle charging infrastructure EVI for charging at least one electric vehicle, EV, wherein the apparatus comprises:

   means for collecting EV related data;
   means for collecting EVI related data;
   means for managing the simultaneous charging of the at least one EV taking into account the EV related data and the EVI related data;

wherein the means for managing comprises:

means for forecasting EV and EVI related data not completely collected; and
means for optimizing the charging process based on the completed EV and EVI related data.

2. The apparatus of claim 1, wherein the EV related data comprises objective information such as arrival and departure information, and/or average parking time, and/or charging energy required per EV, and/or charging capacity per EV, and/or current energy stored in EV.

3. The apparatus of claim 2, wherein the EV related data comprises subjective information such as user charging preferences, chosen from quick charging, economic charging, or ecofriendly charging, and/or user historical behavioural data stored during a predetermined time interval.

4. The apparatus of claim 3, wherein the EVI related data comprises power supply grid total energy demand, and/or power supply grid sectorial energy demand, and/or maximum power available, and/or variable electricity price tariff, and/or current weather conditions, and/or maximum power transfer possible per charging point.

5. The apparatus of claim 4, wherein the means for forecasting comprises means for estimating a growth factor of the neighbourhood in which the EVI is placed, and/or means for estimating a seasonality factor relating to changes in EV and EVI activity due to different seasons or holiday periods, and/or means for classifying a day type factor relating to changes in EV and EVI activity due to the day of the week, and/or means for classifying a day hour factor related to changes in EV and EVI activity with respect to the time of the day or night.

6. The apparatus of claim 4, wherein the means for forecasting comprises means for estimating social network activity indicators of particular events in the neighbourhood of the EVI.

7. The apparatus of any preceding claim, further comprising means for updating the EV and EVI related information continuously with real-time information.

8. The apparatus of any preceding claim, further comprising means for filtering the EV and EVI related information using an exponential smoothing operator.

9. The apparatus of any preceding claim, further comprising means for initializing the EV and EVI related information using a Poisson distribution for EV arrival and/or departure rate data, and an Erland distribution for estimating the EV average parking time.

10. The apparatus of claim 4, wherein the means for optimizing comprises means for limiting the total energy transferred to all EV of the at least one EV, and/or means for limiting the energy transferred to each one of the at least one EV, and/or means for limiting the total energy transferred to each EV of the at least one EV based on the EV storage capacity, and/or means for penalizing the EV user.

11. A system for managing an electric vehicle charging infrastructure EVI for charging at least one electric vehicle, EV, wherein the system comprises at least one apparatus of any of the preceding claims, and wherein the means for managing one of the apparatus manages the charging of all apparatus in the system by managing the different means comprised in the apparatus.

12. A method for managing an electric vehicle charging infrastructure EVI for charging at least one electric vehicle, EV, the method comprising:

collecting EV related data;
collecting EVI related data;
managing the simultaneous charging of the at least one EV taking into account the EV related data and the EVI related data;
the managing comprising:

forecasting EV and EVI related data not completely collected; and
optimizing the charging process based on the completed EV and EVI related data.

**13.** The method of claim 12, wherein the EV related data comprises objective information such as arrival and departure information, and/or average parking time, and/or charging energy required per EV, and/or charging capacity per EV, and/or current energy stored in EV, and/or minimum energy required for low energy operation, or wherein the EV related data comprises subjective information such as user charging preferences, chosen from quick charging, economic charging, or ecofriendly charging, and/or user historical behavioural data stored during a predetermined time interval.

**14.** The method of claim 12, wherein the EVI related data comprises power supply grid total energy demand, and/or power supply grid sectorial energy demand, and/or maximum power available, and/or variable electricity price tariff, and/or current weather conditions, and/or maximum power transfer possible per charging point.

**15.** The method of claim 12, wherein the EVI is managed centrally by a central control unit comprised within a single apparatus, or in a distributed manner by at least part of the control units in the EVI, or in a mixed manner, wherein the input and output of the forecasting and optimization algorithms are performed by all apparatus, however wherein a single apparatus serves as central controller for data collection.

**FIG. 4**

**FIG. 1**

20

Mobile Phone/GPS
Credit History
Travel History
Weather Forecast
Real Estate Records
Census Data

Google + Facebook
Twitter   Instagram
Pinterest   Blogs

External Sensor Data

19

CRM  Web Profiles
Sales Records
HR Records
Financials
Inventory

Online Forums
Web Feeds
SharePoint
Sensor Data
Text Documents

Structured        Unstructured

18

INTERNET

6

7

10

9

8

12

15

14

11

16

17

Utility
(Third
party)

**FIG. 2**

**FIG. 3**

Europäisches
Patentamt

European
Patent Office

Office européen
des brevets

# EUROPEAN SEARCH REPORT

Application Number

EP 12 19 9179

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/073453 A1 (V2GREEN INC [US]; KAPLAN DAVID L [US]; BRIDGES SETH W [US]; POLLACK SE) 19 June 2008 (2008-06-19)<br>* paragraph [0078] - paragraph [0081] *<br>* paragraph [0069] *<br>----- | 1-15 | INV.<br>B60L11/18 |
| E | WO 2013/029670 A1 (SIEMENS AG [DE]; SCHRIEK UWE [DE]) 7 March 2013 (2013-03-07)<br>* the whole document *<br>----- | 1 | |

TECHNICAL FIELDS
SEARCHED      (IPC)

B60L

The present search report has been drawn up for all claims

| Place of search | Date of completion of the search | Examiner |
|---|---|---|
| The Hague | 25 June 2013 | Wansing, Ansgar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 12 19 9179

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2013

| Patent document cited in search report | | Publication date | Patent family member(s) | | Publication date |
|---|---|---|---|---|---|
| WO 2008073453 | A1 | 19-06-2008 | CA | 2672422 A1 | 19-06-2008 |
| | | | CA | 2672424 A1 | 19-06-2008 |
| | | | CA | 2672454 A1 | 19-06-2008 |
| | | | CA | 2672508 A1 | 27-11-2008 |
| | | | CN | 101678774 A | 24-03-2010 |
| | | | EP | 2097289 A2 | 09-09-2009 |
| | | | EP | 2099639 A2 | 16-09-2009 |
| | | | EP | 2102028 A1 | 23-09-2009 |
| | | | EP | 2115686 A2 | 11-11-2009 |
| | | | JP | 2010512727 A | 22-04-2010 |
| | | | KR | 20090119754 A | 19-11-2009 |
| | | | KR | 20090119831 A | 20-11-2009 |
| | | | KR | 20090119832 A | 20-11-2009 |
| | | | KR | 20090119833 A | 20-11-2009 |
| | | | KR | 20100014304 A | 10-02-2010 |
| | | | WO | 2008073453 A1 | 19-06-2008 |
| | | | WO | 2008073470 A2 | 19-06-2008 |
| | | | WO | 2008073472 A2 | 19-06-2008 |
| | | | WO | 2008073474 A2 | 19-06-2008 |
| | | | WO | 2008073476 A2 | 19-06-2008 |
| | | | WO | 2008073477 A2 | 19-06-2008 |
| | | | WO | 2008143653 A2 | 27-11-2008 |
| WO 2013029670 | A1 | 07-03-2013 | NONE | | |

EPO FORM P0459

For more details about this annex : see Official Journal of the European Patent Office, No. 12/82